(19) Europäisches Patentamt / European Patent Office / Office européen des brevets

(11) **EP 3 917 815 B1**

(12) **FASCICULE DE BREVET EUROPEEN**

(45) Date de publication et mention de la délivrance du brevet:
**07.08.2024   Bulletin 2024/32**

(21) Numéro de dépôt: **20705772.0**

(22) Date de dépôt: **15.01.2020**

(51) Classification Internationale des Brevets (IPC):
**B60W 30/14** (2006.01)   **B60W 30/17** (2020.01)
**B60W 50/00** (2006.01)   **B60W 40/04** (2006.01)
**B60W 30/165** (2020.01)

(52) Classification Coopérative des Brevets (CPC):
**B60W 30/165; B60W 30/143; B60W 30/17;
B60W 40/04; B60W 50/0097; G06V 20/58;**
B60W 30/14; B60W 2554/4041; B60W 2554/801;
B60W 2554/804

(86) Numéro de dépôt international:
**PCT/FR2020/050053**

(87) Numéro de publication internationale:
**WO 2020/157407 (06.08.2020 Gazette 2020/32)**

(54) **GESTION VIA UNE VITESSE ÉQUIVALENTE D'UNE CONDUITE AUTONOME AVEC AU MOINS DEUX OBJETS CIBLES**

VERWALTUNG ÜBER EINE ÄQUIVALENTE GESCHWINDIGKEIT BEIM AUTONOMEN FAHREN MIT MINDESTENS ZWEI ZIELOBJEKTEN

MANAGEMENT VIA AN EQUIVALENT SPEED OF AUTONOMOUS DRIVING WITH AT LEAST TWO TARGET OBJECTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **31.01.2019   FR 1900932**

(43) Date de publication de la demande:
**08.12.2021   Bulletin 2021/49**

(73) Titulaire: **Stellantis Auto SAS
78300 Poissy (FR)**

(72) Inventeur: **VIVET, Luc
75016 Paris 16 (FR)**

(56) Documents cités:
**DE-A1- 102008 047 499     DE-A1- 102014 219 564**

• **BOVEY B J ET AL: "Target tracking prediction through group correlation analysis", INFORMATION FUSION, 2000. FUSION 2000. PROCEEDINGS OF THE THIRD INTERNATIONAL CONFERENCE ON JULY 10-13, 2000, PISCATAWAY, NJ, USA,IEEE, 10 July 2000 (2000-07-10), pages TUB1/11, XP032457064, ISBN: 978-2-7257-0000-7, DOI: 10.1109/IFIC.2000.862658**
• **BENOIT VANHOLME ET AL: "Highly Automated Driving on Highways Based on Legal Safety", IEEE TRANSACTIONS ON INTELLIGENT TRANSPORTATION SYSTEMS, IEEE, PISCATAWAY, NJ, USA, vol. 14, no. 1, 1 March 2013 (2013-03-01), pages 333 - 347, XP011495838, ISSN: 1524-9050, DOI: 10.1109/TITS.2012.2225104**

**Description**

La présente invention appartient au domaine du véhicule autonome. Elle concerne en particulier un procédé et un dispositif de conduite autonome d'un véhicule, appelé égo-véhicule, pour gérer la situation où deux objets cibles concernent l'égo-véhicule.

Elle est particulièrement avantageuse dans le cas d'un véhicule automobile dont la vitesse est régulée de manière adaptative en suivant les objets cibles.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Dans la suite, le terme d' « égo-véhicule » est utilisé pour désigner le véhicule dont la conduite autonome est déterminé.

On entend par « route » tout moyen de communication impliquant un déplacement physique d'un véhicule. Une route nationale, départementale, locale, européenne, internationale, une autoroute nationale, européenne, internationale, un chemin forestier, un parcours pour dispositifs autonomes de rangement d'un entrepôt de stockage, etc. sont des exemples de routes.

La route comprend au moins une chaussée. On entend par « chaussée » tout moyen physique apte à supporter le déplacement d'un véhicule. Une autoroute comprend typiquement deux chaussées séparées par un terre-plein central.

La chaussée comprend au moins une voie. On entend par « voie » toute portion de chaussée affectée à une file de véhicule. Une chaussée d'une autoroute comprend typiquement au moins deux voies de circulation. Une voie d'insertion sur l'autoroute, une voie unique dans un tunnel, une voie de circulation à sens unique située dans une ville, etc. sont des exemples de voies.

Une voie peut être délimitée par des marquages au sol mais elle peut également correspondre à une trajectoire sur la chaussée empruntée par les véhicules circulant sur la chaussée. Une telle voie peut être appelée « voie virtuelle » car cette voie n'est pas délimitée par des marquages physiques mais est générée à partir de trajectoires passées empruntées par les véhicules circulant sur la chaussée.

Les véhicules sont fréquemment équipés de régulateurs de vitesse adaptatif. Un régulateur de vitesse adaptatif fonctionne en régulant la vitesse de l'égo-véhicule en fonction, notamment, de la vitesse d'un objet cible (principalement un véhicule cible) précédant l'égo-véhicule dans sa voie.

Un régulateur de vitesse adaptatif est aussi connu sous le nom d'ACC, pour Adaptative Cruise Control en anglais, la traduction française étant régulateur de vitesse adaptatif.

La sélection d'un objet cible pour la conduite autonome, par exemple pour la régulation de vitesse adaptative, est cruciale. Dans la pratique, les situations où plus d'un objet cible est détecté par l'égo-véhicule sont courantes.

On connait de DE102008047499 un système d'affichage de la situation du trafic ; utilisant le contrôle de distance du véhicule avec le régulateur de vitesse adaptatif, donnant un affichage en perspective de la cible devant et de tout objet cible supplémentaire dans le trafic. On connait de BOVEY B J et al, DOI: 10.1109/IFIC.2000.862658, une prédiction de suivi des cibles grâce à l'analyse de corrélation de groupe. On connait de DE102014219564, un procédé et un contrôleur pour déterminer une distance souhaitée estimée entre deux utilisateurs. On connait de BENOIT VANHOLME et al, D01: 10.1109/TITS.2012.2225104, une conduite hautement automatisée sur les autoroutes basées sur la sécurité réglementaire.

Par exemple, lorsque l'égo-véhicule évolue sur la voie de droite sur une autoroute dans un pays où la conduite se fait à droite comportant deux chaussées séparées par un terre-plein central et comportant chacune deux voies (la voie de droite et la voie de gauche), il est possible que deux objets cibles, par exemple deux autres véhicules, circulent devant l'égo-véhicule.

Les méthodes actuelles de conduite autonome gèrent habituellement cette situation en prenant pour objet cible utilisé comme référence pour la régulation adaptative de vitesse, l'objet cible le plus proche de l'égo-véhicule. Avec cette méthode, l'objet cible est correctement détecté par les capteurs de l'égo-véhicule. Cependant, des déficiences de sécurité importantes sont présentes avec un telle méthode.

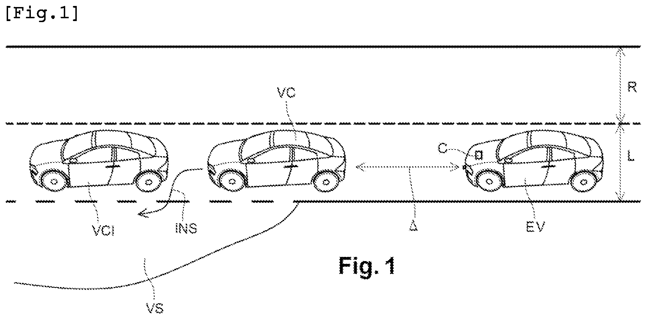

En effet, il est possible que l'objet le plus proche de l'égo-véhicule présente une conduite dangereuse, par exemple en se rapprochant très vite d'un deuxième objet cible ayant une vitesse plus faible. Cette situation est illustrée ci-après en référence à la figure 1.

Dans cette situation, prendre l'objet ayant la conduite dangereuse, ici appelé premier objet cible, comme référence pour la régulation adaptative de vitesse est très risqué. En effet, le premier objet cible peut déboiter très rapidement pour doubler dans une manoeuvre brutale le deuxième objet cible. Ceci n'est pas acceptable pour l'égo-véhicule, qui peut ne pas avoir les mêmes aptitudes de tenue de route, ou tout simplement parce que les passagers ne veulent pas subir une telle manoeuvre.

La présente invention vient améliorer la situation.

A cet effet, un premier aspect de l'invention concerne un procédé de conduite autonome tel que défini par la revendication 1.

La conduite autonome prenant en considération le minimum entre la vitesse du premier objet cible et une vitesse pondérée du deuxième objet cible, les phénomènes de manoeuvres brutales sont limités.

En effet, en prenant la plus faible des vitesses des deux objets cibles, l'égo-véhicule peut avantageusement anticiper qu'un des objets cibles présente une importante différence de vitesse avec l'autre objet cible et/ou l'égo-véhicule. Dès lors, la conduite autonome de l'égo-véhicule anticipe en réduisant par exemple sa vitesse longitudinale ou en changeant de voie. Par ailleurs, la prise en compte d'une vitesse pondérée pour le deuxième objet cible rend possible une prise en compte de la situation réelle dans laquelle se trouve l'égo-véhicule. En effet, si le premier et le deuxième objet cible se rapproche à très faible vitesse, l'anticipation de la présence du deuxième objet cible par le deuxième véhicule peut-être plus progressive que dans le cas où le premier objet cible se rapproche très vite du deuxième objet cible.

On entend par « objet cible » tout objet présent dans un environnement de l'égo-véhicule. Par exemple, tout véhicule terrestre situé devant (en amont de la trajectoire de) l'égo-véhicule, tout type d'obstacle, une perturbation quelconque sur la chaussée, etc. sont des objets cibles.

Par ailleurs, il est ici fait mention de deux objets cibles, au moins. L'invention n'est bien sûr pas limitée à deux objets cible mais peut-être déclinée pour une infinité d'objets cibles. Ainsi, par exemple, pour trois objets cibles, et comme cela sera détaillé ci-après dans la description, la vitesse du premier objet cible est utilisée et des vitesses pondérées sont utilisées pour les deux autres objets cibles.

On entend par « des données » tout type d'information par exemple disponible sous forme numérique. L'utilisation de la forme plurielle pour « les données » ne signifie pas nécessairement que plusieurs données sont présentes, un bit pouvant par exemple être entendu comme « des données ».

Selon l'invention, la distance entre le premier objet cible et l'égo-véhicule est inférieure à la distance entre le deuxième objet cible et l'égo-véhicule. Alternativement, selon l'invention, le premier objet cible présente une durée avant collision avec l'égo-véhicule inférieure à une durée avant collision entre le deuxième objet cible et l'égo-véhicule. Ainsi, la sélection de ou des objets cibles pour laquelle la vitesse pondérée est prise en compte est possible, en fonction notamment des contraintes dynamiques tolérables pour l'égo-véhicule. Dans un mode de réalisation, l'instruction de conduite autonome comprend une instruction de régulation adaptative de la vitesse de l'égo-véhicule, la régulation adaptative étant configurée pour prendre en compte un objet virtuel évoluant à une vitesse ayant la valeur dudit minimum. Dans un mode de réalisation, la vitesse de rapprochement entre le premier objet cible et le deuxième objet cible est déterminée à partir des données de mouvement du premier objet cible et des données de mouvement du deuxième objet cible. En particulier, la vitesse pondérée du deuxième objet cible est déterminée à partir d'une formule du type :

[Math. 1]

$$SpdEq = V2 + \frac{X2 - (X1 + lenTar)}{t}$$

avec SpdEq la vitesse pondérée, V2 la vitesse du deuxième objet cible, X2 une distance entre l'égo-véhicule et le deuxième objet cible, X1 une distance entre l'égo-véhicule et le premier objet cible, lenTar une longueur du premier objet cible, t une durée temporelle relative à un intervalle temporel entre le premier et le deuxième objet cible.

Un deuxième aspect de l'invention vise un programme informatique selon la revendication 8.

Un troisième aspect de l'invention vise un dispositif de conduite autonome d'un véhicule, selon la revendication 6.

Un quatrième aspect de l'invention vise un véhicule comportant le dispositif selon le troisième aspect de l'invention.

D'autres caractéristiques et avantages de l'invention apparaîtront à l'examen de la description détaillée ci-après, et des dessins annexés sur lesquels :

[Fig.1] illustre un contexte d'application de l'invention ;

[Fig.2] illustre un procédé selon l'invention ;

[Fig.3] illustre un dispositif, selon un mode de réalisation de l'invention.

L'invention est décrite ci-après dans son application, non limitative, au cas d'un véhicule automobile autonome circulant sur une autoroute comportant deux chaussées séparées par un terre-plein central et comportant chacune deux voies. D'autres applications telles qu'un autobus sur une voie dédiée ou encore une motocyclette sur une route de campagne sont également envisageables.

En outre, l'invention est décrite ci-après pour la détermination d'une grandeur relative au mouvement longitudinal de l'égo-véhicule dans le cadre de la détermination d'une cible pour le régulateur de vitesse adaptatif. D'autres applications de la détermination d'une telle grandeur sont également envisageable, en dehors de la régulation adaptative d'un égo-véhicule. Par exemple, une telle grandeur peut être déterminée comme l'une des grandeurs de consigne pour la conduite autonome de l'égo-véhicule.

La **figure 1** illustre une chaussée d'autoroute comportant deux voies, une voie de gauche L et une voie de droite R présentant le même sens de circulation (du bas vers le haut de la figure).

La voie gauche L comporte un égo-véhicule EV, un deuxième objet cible VCI et un premier objet cible VC. Ici, la distance entre le premier objet cible et l'égo-véhicule est inférieure à la distance entre le deuxième objet cible et l'égo-véhicule.

Toutefois, dans un autre mode de réalisation, pour déterminer le premier objet cible et le deuxième objet cible, la règle suivante est utilisée : le premier objet cible présente une durée avant collision avec l'égo-véhicule inférieure à une durée avant collision entre le deuxième objet cible et l'égo-véhicule. Une durée avant collision, « time-to-collision (TTC) » en anglais, est tout type de durée correspondant au temps, à un instant t, que mettrait égo-véhicule à percuter un objet cible si les données de mouvement de l'égo-véhicule et de l'objet cible restent celles présentent à l'instant t.

Le premier objet cible VC change de voie selon une manoeuvre INS. La nouvelle voie de VC est ici une sortie d'autoroute VS. Bien sûr d'autres voies finales pour VC peuvent être choisies, la voie la plus à droite sur l'autoroute, une voie de freinage d'urgence, etc.

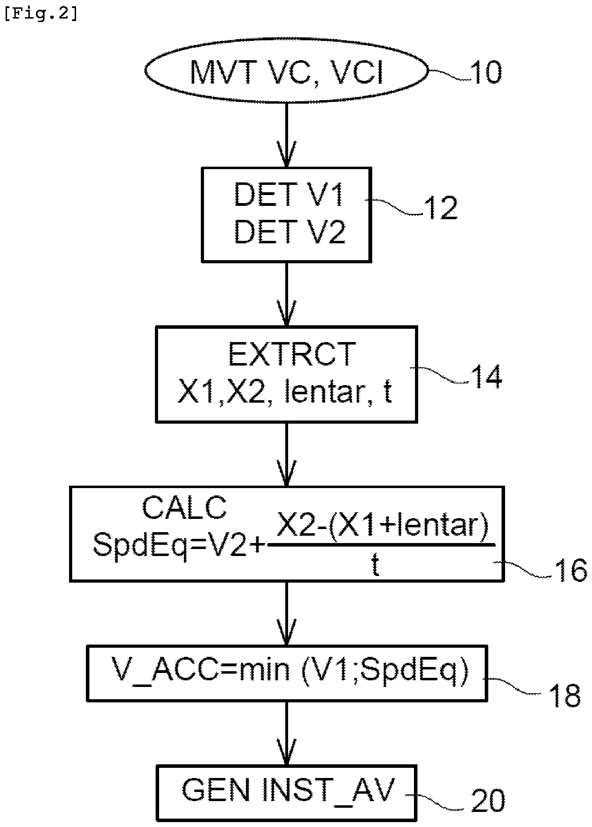

Pour illustrer la pertinence du procédé selon l'invention, décrit ci-après en détail en référence à la figure 2, il peut être considéré que le premier objet cible VC a une vitesse bien supérieure à celle du deuxième objet cible VCI et ne freine pas dans la perspective de sa sortie de l'autoroute via la sortie VS.

Une telle situation est relativement fréquente dans les environnements urbains, typiquement sur les périphériques de grandes agglomérations, ou de nombreux conducteurs ont une conduite agressive. Dans une telle situation, la régulation adaptative de vitesse de l'égo-véhicule doit anticiper au mieux le deuxième objet cible VCI.

La **figure 2** illustre le procédé, selon un mode de réalisation de l'invention.

A une étape 10, un capteur C de l'égo-véhicule acquiert des données de mouvement du premier objet cible VC et des données de mouvement du deuxième objet cible VCI.

Le capteur C de l'égo-véhicule est l'un au moins des éléments parmi :

- un radar ;
- un lidar ;
- une caméra, par exemple une caméra vidéo multifonction, CVM ;
- un système de communication (par exemple Car2X ou 5G) configuré pour recevoir des informations d'au moins un autre véhicule, une infrastructure, un terminal utilisateur, etc. ;
- un laser ;
- etc.

Les données brutes acquises par le capteur C sont traitées et font l'objet d'une fusion lorsque plusieurs capteurs sont utilisés.

Il est ici confirmé que les capteurs de l'égo-véhicule EV peuvent bien, dans certaines situations, acquérir des données sur le deuxième objet cible VCI, même si celui-ci est partiellement masqué par le premier objet cible VC. Par exemple, les ondes émises par un radar passent sous le premier objet cible VC pour localiser le deuxième objet cible. Dans un autre exemple, les données de mouvement de VCI sont directement transmises par une communication 5G à l'égo-véhicule EV.

A une étape 12, une vitesse V1 du premier objet cible et une vitesse V2 du deuxième objet cible sont déterminées à partir des données de mouvement acquises à l'étape 10.

Une étape 14 consiste ensuite à extraire les données suivantes à partir des données de mouvements acquises à l'étape 10 :

X2 une distance (par exemple entre pare-chocs avant EV et arrière VCI) entre l'égo-véhicule et le deuxième objet cible,

X1 une distance (par exemple entre pare-chocs avant EV et arrière VC) entre l'égo-véhicule et le premier objet cible,

lenTar une longueur (par exemple entre pare-chocs avant VC et arrière VC) du premier objet cible.

A une étape 16, un calcul d'une vitesse pondérée SpdEq est effectué. Dans un mode de réalisation, ledit calcul est mis en oeuvre par la formule :

[Math. 2]

$$SpdEq = V2 + \frac{X2 - (X1 + lenTar)}{t}$$

A une étape 18, un minimum entre la vitesse V1 du premier objet cible et la vitesse SpdEq pondérée du deuxième objet cible est obtenue pour déterminer une vitesse V_ACC cible équivalente.

A une étape 20, d'une instruction de conduite autonome INST _A V de l'égo-véhicule EV est déterminée à partir dudit minimum. En particulier, dans un mode de réalisation, la régulation adaptative est configurée pour prendre en compte un objet virtuel évoluant à la vitesse V_ACC.

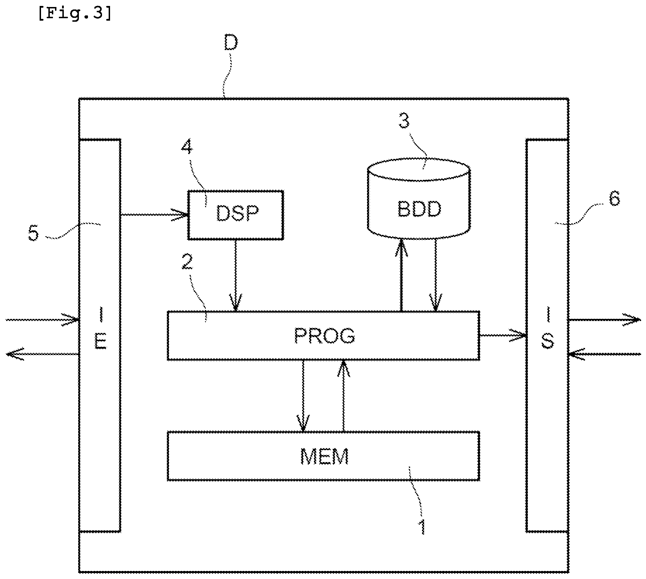

La **figure 3** représente un exemple de dispositif D compris dans l'égo-véhicule EV. Ce dispositif D peut être utilisé en tant que dispositif centralisé en charge d'au moins certaines étapes du procédé décrit ci-avant en référence à la figure 2.

Ce dispositif D peut prendre la forme d'un boitier comprenant des circuits imprimés, de tout type d'ordinateur ou encore d'un smartphone.

Le dispositif D comprend une mémoire vive 1 pour stocker des instructions pour la mise en oeuvre par un processeur 2 d'au moins une étape des procédés tels que décrits ci-avant. Le dispositif comporte aussi une mémoire de masse 3 pour le stockage de données destinées à être conservées après la mise en oeuvre du procédé.

Le dispositif D peut en outre comporter un processeur de signal numérique (DSP) 4. Ce DSP 4 reçoit des données pour mettre en forme, démoduler et amplifier, de façon connue en soi ces données.

Le dispositif comporte également une interface d'entrée 5 pour la réception des données mises en oeuvre par des procédés selon l'invention et une interface de sortie 6 pour la transmission des données mises en oeuvre par les procédés.

La présente invention ne se limite pas aux formes de réalisation décrites ci-avant à titre d'exemples ; elle s'étend à d'autres variantes.

Ainsi, on a décrit ci-avant un exemple de réalisation dans lequel l'égo-véhicule évoluait sur une autoroute comporte deux chaussées de deux voies, les chaussées étant séparées par un terre-plein central. L'invention peut également être mise en oeuvre pour d'autres types de routes, tels que des routes nationales à chaussée unique comportant deux voies, des autoroutes à chaussées séparées, chaque chaussée comprenant 6 voies, etc.

De plus, on a décrit un mode de réalisation dans lequel l'invention était décrite dans le cadre de l'application à la régulation adaptative de vitesse. L'invention n'est pas limitée à une telle application et peut être mise en oeuvre par exemple pour des procédés / dispositifs de maintien dans la voie ou encore de prise de décision pour le changement de voie.

Des équations et calculs ont en outre été détaillés. L'invention n'est pas limitée à la forme de ces équations et calcul, et s'étend à tout type d'autre forme mathématiquement équivalente.

En outre, les étapes décrites en référence à la figure 2 l'ont été dans un ordre précis. Un ordre différent est également envisageable. Par exemple, les étapes 12 et 14 peuvent être interverties ou encore effectuées simultanément.

**Revendications**

1. Procédé de conduite autonome d'un véhicule, appelé égo-véhicule (EV), en présence d'au moins deux objets cibles, un premier objet cible un deuxième objet cible, le procédé comportant les étapes de :

   - acquisition (10) par au moins un capteur de l'égo-véhicule de données de mouvement du premier objet cible ;
   - détermination (12) d'une vitesse du premier objet cible à partir desdites données de mouvement du premier objet cible ;
   - acquisition (10) par au moins un capteur de l'égo-véhicule de données de mouvement du deuxième objet cible ;
   - détermination (16) d'une vitesse pondérée du deuxième objet cible à partir des données de mouvement du premier objet cible et des données de mouvement du deuxième objet cible, ladite pondération étant fonction d'une vitesse de rapprochement entre le premier objet cible et le deuxième objet cible ;
   - détermination (18) du minimum entre la vitesse du premier objet cible et la vitesse pondérée du deuxième objet cible ;

- génération (20) d'une instruction de conduite autonome de l'égo-véhicule à partir dudit minimum ;

et dans lequel la distance entre le premier objet cible et l'égo-véhicule étant inférieure à la distance entre le deuxième objet cible et l'égo-véhicule, ou le premier objet cible présente une durée avant collision avec l'égo-véhicule inférieure à une durée avant collision entre le deuxième objet cible et l'égo-véhicule.

2.  Procédé selon la revendication 1, dans lequel l'instruction de conduite autonome comprend une instruction de régulation adaptative de la vitesse de l'égo-véhicule, la régulation adaptative étant configurée pour prendre en compte un objet virtuel évoluant à une vitesse (V_ACC) ayant la valeur dudit minimum.

3.  Procédé selon l'une des revendications précédentes, dans lequel la vitesse de rapprochement entre le premier objet cible et le deuxième objet cible est déterminée à partir des données de mouvement du premier objet cible et des données de mouvement du deuxième objet cible.

4.  Procédé selon l'une des revendications précédentes, dans lequel la vitesse pondérée du deuxième objet cible est déterminée à partir d'une vitesse du deuxième objet cible déterminée à partir de données de mouvement du deuxième objet cible et de la vitesse de rapprochement entre le premier objet cible et le deuxième objet cible.

5.  Procédé selon la revendication 4, dans lequel la vitesse pondérée du deuxième objet cible est déterminée à partir d'une formule du type :

[Math. 3]

$$SpdEq = V2 + \frac{X2 - (X1 + lenTar)}{t}$$

avec SpdEq la vitesse pondérée, V2 la vitesse du deuxième objet cible, X2 une distance entre l'égo-véhicule et le deuxième objet cible, X1 une distance entre l'égo-véhicule et le premier objet cible, lenTar une longueur du premier objet cible, t une durée temporelle relative à un intervalle temporel entre le premier et le deuxième objet cible.

6.  Dispositif (D) de conduite autonome d'un véhicule, appelé égo-véhicule (EV), en présence d'au moins deux objets cibles, un premier objet cible un deuxième objet cible, le dispositif comportant : - au moins un capteur (C) configuré pour l'acquisition de données de mouvement du premier objet cible et de données de mouvement du deuxième objet cible; - au moins un processeur (2) et au moins une mémoire (1, 3) agencés pour effectuer les opérations de: détermination d'une vitesse du premier objet cible à partir desdites données de mouvement du premier objet cible; détermination d'une vitesse pondérée du deuxième objet cible à partir des données de mouvement du premier objet cible et des données de mouvement du deuxième objet cible, ladite pondération étant fonction d'une vitesse de rapprochement entre le premier objet cible et le deuxième objet cible; détermination du minimum entre la vitesse du premier objet cible et la vitesse pondérée du deuxième objet cible; génération d'une instruction de conduite autonome de l'égo-véhicule à partir dudit minimum; où la distance entre le premier objet cible et l'égo-véhicule est inférieure à la distance entre le deuxième objet cible et l'égo-véhicule, ou alternativement, où le premier objet cible présente une durée avant collision avec l'égo-véhicule inférieure à une durée avant collision entre le deuxième objet cible et l'égo-véhicule.

7.  Véhicule (EV) comportant le dispositif selon la revendication 6.

8.  Programme informatique comportant des instructions pour la mise en oeuvre du procédé selon l'une des revendications 1 à 5 précédentes, lorsque ces instructions sont exécutées sur un dispositif selon la revendication 6.

**Patentansprüche**

1.  Verfahren zum autonomen Fahren eines Fahrzeugs, genannt Ego-Fahrzeug (EV), bei Anwesenheit von mindestens zwei Zielobjekten, wobei ein erstes Objekt ein zweites Zielobjekt anvisiert, wobei das Verfahren die Schritte umfasst:

    - Erfassung (10) von Bewegungsdaten des ersten Zielobjekts durch mindestens einen Sensor des Ego-Fahrzeugs;

- Ermitteln (12) einer Geschwindigkeit des ersten Zielobjekts aus den Bewegungsdaten des ersten Zielobjekts;
- Erfassen (10) von Bewegungsdaten des zweiten Zielobjekts durch mindestens einen Sensor des Ego-Fahrzeugs;
- Ermitteln (16) einer gewichteten Geschwindigkeit des zweiten Zielobjekts aus den Bewegungsdaten des ersten Zielobjekts und den Bewegungsdaten des zweiten Zielobjekts, wobei die Gewichtung eine Funktion einer Annäherungsgeschwindigkeit zwischen dem ersten Zielobjekt und dem ist zweites Zielobjekt;
- Ermitteln (18) des Minimums zwischen der Geschwindigkeit des ersten Zielobjekts und der gewichteten Geschwindigkeit des zweiten Zielobjekts;
- Generierung (20) einer autonomen Fahranweisung für das Ego-Fahrzeug aus diesem Minimum;

und wobei der Abstand zwischen dem ersten Zielobjekt und dem Ego-Fahrzeug geringer ist als der Abstand zwischen dem zweiten Zielobjekt und dem Ego-Fahrzeug oder das erste Zielobjekt eine geringere Dauer bis zur Kollision mit dem Ego-Fahrzeug zu einem Zeitpunkt davor aufweist Kollision zwischen dem zweiten Zielobjekt und dem Ego-Fahrzeug.

2. Verfahren nach Anspruch 1, bei dem die autonome Fahranweisung eine Anweisung zur adaptiven Regelung der Geschwindigkeit des Ego-Fahrzeugs umfasst, wobei die adaptive Regelung zur Berücksichtigung eines virtuellen Objekts konfiguriert ist, das sich mit einer Geschwindigkeit (V_ACC) bewegt Wert dieses Minimums.

3. Verfahren nach einem der vorhergehenden Ansprüche, bei dem aus den Bewegungsdaten des ersten Zielobjekts und den Bewegungsdaten des zweiten Zielobjekts die Annäherungsgeschwindigkeit zwischen dem ersten Zielobjekt und dem zweiten Zielobjekt ermittelt wird.

4. Verfahren nach einem der vorhergehenden Ansprüche, bei dem die gewichtete Geschwindigkeit des zweiten Zielobjekts aus einer aus Bewegungsdaten des zweiten Zielobjekts ermittelten Geschwindigkeit des zweiten Zielobjekts und der Annäherungsgeschwindigkeit zwischen dem ersten Zielobjekt ermittelt wird und das zweite Zielobjekt.

5. Verfahren nach Anspruch 4, bei dem die gewichtete Geschwindigkeit des zweiten Zielobjekts aus einer Formel der Art ermittelt wird:

[Mathematik. 3]

$$SpdEq = V2 + \frac{X2 - (X1 + lenTar)}{t}$$

mit SpdEq der gewichteten Geschwindigkeit, V2 der Geschwindigkeit des zweiten Zielobjekts, X2 einem Abstand zwischen dem Ego-Fahrzeug und dem zweiten Zielobjekt, X1 einem Abstand zwischen dem Ego-Fahrzeug und dem ersten Zielobjekt, lenTar einer Länge des ersten Objekts Ziel, t eine zeitliche Dauer bezogen auf einen zeitlichen Abstand zwischen dem ersten und dem zweiten Zielobjekt.

6. Vorrichtung (D) zum autonomen Fahren eines Fahrzeugs, genannt Ego-Fahrzeug (EV), bei Anwesenheit von mindestens zwei Zielobjekten, einem ersten Zielobjekt und einem zweiten Zielobjekt, wobei die Vorrichtung umfasst: - mindestens einen Sensor (C) konfiguriert, um Bewegungsdaten des ersten Zielobjekts und Bewegungsdaten des zweiten Zielobjekts zu erfassen; - mindestens einen Prozessor (2) und mindestens einen Speicher (1, 3), die so angeordnet sind, dass sie die Operationen zum Bestimmen einer Geschwindigkeit des ersten Zielobjekts aus den Bewegungsdaten des ersten Zielobjekts ausführen; Bestimmen einer gewichteten Geschwindigkeit des zweiten Zielobjekts aus den Bewegungsdaten des ersten Zielobjekts und den Bewegungsdaten des zweiten Zielobjekts, wobei die Gewichtung eine Funktion einer Annäherungsgeschwindigkeit zwischen dem ersten Zielobjekt und dem zweiten Zielobjekt ist; Bestimmen des Minimums zwischen der Geschwindigkeit des ersten Zielobjekts und der gewichteten Geschwindigkeit des zweiten Zielobjekts; Generierung einer autonomen Fahranweisung für das Ego-Fahrzeug aus diesem Minimum; wobei der Abstand zwischen dem ersten Zielobjekt und dem Ego-Fahrzeug geringer ist als der Abstand zwischen dem zweiten Zielobjekt und dem Ego-Fahrzeug, oder alternativ, wenn das erste Zielobjekt eine Dauer bis zur Kollision mit dem Ego-Fahrzeug hat, die kleiner als a ist Dauer bis zur Kollision zwischen dem zweiten Zielobjekt und dem Ego-Fahrzeug.

7. Fahrzeug (EV), umfassend die Vorrichtung nach Anspruch 6.

8. Computerprogramm mit Anweisungen zur Durchführung des Verfahrens nach einem der vorhergehenden Ansprüche 1 bis 5, wenn diese Anweisungen auf einem Gerät nach Anspruch 6 ausgeführt werden.

**Claims**

1. Method for autonomous driving of a vehicle, called ego-vehicle (EV), in the presence of at least two target objects, a first object targets a second target object, the method comprising the steps of:

   - acquisition (10) by at least one sensor of the ego-vehicle of movement data of the first target object;
   - determination (12) of a speed of the first target object from said movement data of the first target object;
   - acquisition (10) by at least one sensor of the ego-vehicle of movement data of the second target object;
   - determination (16) of a weighted speed of the second target object from the movement data of the first target object and the movement data of the second target object, said weighting being a function of a speed of approximation between the first target object and the second target object;
   - determination (18) of the minimum between the speed of the first target object and the weighted speed of the second target object;
   - generation (20) of an autonomous driving instruction for the ego-vehicle from said minimum;

   and wherein the distance between the first target object and the ego-vehicle is less than the distance between the second target object and the ego-vehicle, or the first target object has a lower duration before collision with the ego-vehicle at a time before collision between the second target object and the ego-vehicle.

2. Method according to claim 1, in which the autonomous driving instruction comprises an instruction for adaptive regulation of the speed of the ego-vehicle, the adaptive regulation being configured to take into account a virtual object moving at a speed (V_ACC ) having the value of said minimum.

3. Method according to one of the preceding claims, in which the speed of approximation between the first target object and the second target object is determined from the movement data of the first target object and the movement data of the second target object.

4. Method according to one of the preceding claims, in which the weighted speed of the second target object is determined from a speed of the second target object determined from movement data of the second target object and the speed of approximation between the first target object and the second target object.

5. Method according to claim 4, in which the weighted speed of the second target object is determined from a formula of the type:

   [Math. 3]

   $$SpdEq = V2 + \frac{X2 - (X1 + lenTar)}{t}$$

   with SpdEq the weighted speed, V2 the speed of the second target object, X2 a distance between the ego-vehicle and the second target object, X1 a distance between the ego-vehicle and the first target object, lenTar a length of the first object target, t a temporal duration relating to a temporal interval between the first and the second target object.

6. Device (D) for autonomous driving of a vehicle, called ego-vehicle (EV), in the presence of at least two target objects, a first target object a second target object, the device comprising: - at least one sensor (C) configured to acquire motion data of the first target object and motion data of the second target object; - at least one processor (2) and at least one memory (1, 3) arranged to perform the operations of determining a speed of the first target object from said movement data of the first target object; determining a weighted speed of the second target object from the movement data of the first target object and the movement data of the second target object, said weighting being a function of a speed of approach between the first target object and the second target object ; determining the minimum between the speed of the first target object and the weighted speed of the second target object; generation of an autonomous driving instruction for the ego-vehicle from said minimum; where the distance between the first target object and the ego-vehicle is less than the distance between the second target object and the ego-vehicle, or alternatively, where the first target object has a duration before collision with the ego-vehicle less than a duration before collision between the second target object and the ego-vehicle.

7. Vehicle (EV) comprising the device according to claim 6.

8. Computer program comprising instructions for implementing the method according to one of the preceding claims 1 to 5, when these instructions are executed on a device according to claim 6.

[Fig.1]

**Fig. 1**

[Fig.2]

$$SpdEq = V2 + \frac{X2-(X1+lentar)}{t}$$

$$V\_ACC = min(V1; SpdEq)$$

[Fig.3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102008047499
- DE 102014219564